# FASCICULE DE BREVET EUROPEEN

(11) **EP 0 926 501 B1**
(45) Date de publication et mention de la délivrance du brevet: **03.03.2004**
(21) Numéro de dépôt: 98403058.5
(22) Date de dépôt: 07.12.1998
(51) Int. Cl.: G01P 3/50

(54) **Montage de roue de patin en ligne avec dispositif de détection de la vitesse de rotation**
Radbefestigungseinrichtung für einspurigen Rollschuh mit Vorrichtung zur Messung der Drehgeschwindigkeit
In-line skate wheel mounting with rotational speed detection device

(30) Priorité: 18.12.1997 FR 9716068
(43) Date de publication de la demande: 30.06.1999
(73) Titulaire: SKF FRANCE, F-92140 Clamart (FR)
(72) Inventeur: Message, Olivier, 37000 Tours (FR); Landrieve, Franck, 37230 Fondettes (FR)
(74) Mandataire: Casalonga, Axel

(56) Documents cités:
- EP-A- 0 531 924
- EP-A- 0 745 778
- WO-A-93/04745
- DE-U- 29 708 535

## Description

La présente invention concerne le domaine des patins à roues disposées sur une ligne, un dispositif de détection de la rotation des roues étant prévu.

D'une façon générale, les roues de patins en ligne sont montées les unes derrière les autres sur les flancs latéraux d'une platine solidaire d'une chaussure. Chaque roue est montée à rotation sur un axe fixe par l'intermédiaire de deux paliers à roulement, ledit axe étant solidarisé par ses extrémités aux flancs de la platine.

Le document DE-U-297 08 535 concerne des dispositifs de patins en ligne instrumentés. La roue arrière d'un patin est équipée d'un codeur venant défiler à rotation devant un capteur solidaire d'une partie non tournante du patin. Le signal est traité et transmis sans fil à un bracelet d'affichage situé sur le poignet du patineur. Toutefois, les roues se trouvant au ras du sol, le dispositif de détection de la vitesse de rotation est particulièrement exposé aux pollutions diverses par l'eau, la boue et d'autres impuretés. Les patins sont également soumis à des chocs fréquents occasionnés lors des chutes du patineur, de franchissements de trottoirs etc. Le document précité est muet à ce sujet.

L'invention a donc pour objet de résoudre le problème de protection de l'ensemble capteur/codeur qui se pose dans ce type de montage.

L'invention a également pour objet un dispositif de détection de la vitesse de rotation dans lequel les éléments comportant le moyen capteur et le moyen codeur se substituent à des éléments d'origine ou se montent sur des éléments d'origine sans nécessiter aucune modification de la roue ou des pièces d'origine subsistant dans le montage de roue.

L'équipement d'un patin conventionnel avec un système de détection suivant l'invention peut donc être effectué aisément par l'utilisateur, sans nécessiter de compétence particulière ou d'outillage spécial.

Le dispositif de détection de la vitesse de rotation d'une roue, selon l'invention, est destiné à un patin en ligne. La roue est supportée par des bagues extérieures tournantes de deux paliers à roulement. Des bagues intérieures fixes des deux paliers à roulement sont solidaires d'un axe monté sur une platine. Le dispositif de détection comprend un moyen capteur et un moyen codeur disposés dans un volume délimité axialement par les deux paliers à roulement et radialement par une surface cylindrique coaxiale aux paliers à roulement et de diamètre égal aux diamètres extérieurs des bagues extérieures des paliers à roulement. Ainsi, le codeur se trouve dans une enceinte parfaitement protégée du milieu extérieur. Le dispositif de détection peut s'adapter facilement sur un patin en ligne standard dépourvu jusqu'alors de moyen de détection, par une simple interchangeabilité des éléments ou par montage d'éléments additionnels ne nécessitant pas de modification des pièces d'origine du patin. Le dispositif de détection est donc très facilement utilisable. Le codeur peut être intégré à un bloc porte codeur solidaire d'une bague tournante d'un palier à roulement ou d'un élément fixe.

Dans un mode de réalisation de l'invention, le moyen codeur est monté sur un élément fixe du montage de roue.

Dans un autre mode de réalisation, le moyen codeur est monté sur un élément tournant du montage de roue. Le moyen codeur peut être monté sur une bague de l'un des paliers à roulement, par exemple à la place d'un organe d'étanchéité. Le moyen codeur peut être monté en contact avec l'alésage de la roue.

Le moyen codeur peut être solidaire d'une entretoise en forme de manchon entourant l'axe et supportant les bagues intérieures des paliers à roulement.

Dans un mode de réalisation de l'invention, le dispositif de détection comprend un moyen capteur disposé en regard du moyen codeur et solidaire d'un élément fixe du montage de roue lorsque le moyen codeur est solidaire d'un élément tournant et solidaire d'un élément tournant lorsque le moyen codeur est solidaire d'un élément fixe du montage de roue. Le moyen capteur peut être disposé dans un logement aménagé dans l'axe et peut comprendre un émetteur disposé à une extrémité dudit axe. En variante, le moyen capteur peut être disposé dans un bloc monté sur une bague d'un des paliers à roulement, ou sur l'axe entre les deux paliers à roulement, ou dans l'alésage de la roue. Le moyen capteur peut être en contact avec des surfaces radiales des deux paliers à roulement. Avantageusement, le moyen capteur comprend un émetteur disposé dans le bloc.

Pour l'alimentation de l'émetteur, on peut prévoir une pile ou une génératrice tournante.

Le moyen capteur et le moyen codeur peuvent être mis en place en conservant à la roue sa structure et sa forme d'origine.

L'invention a également pour objet un patin à roues en ligne équipé d'un tel dispositif de détection.

On dispose ainsi d'un patin dont le dispositif de détection est particulièrement bien protégé contre les pollutions extérieures et les chocs et dont les roues peuvent être changées tout en conservant le même dispositif de détection qui peut même être monté sur un patin qui en était dépourvu à l'origine.

La présente invention sera mieux comprise à l'étude de la description détaillée de quelques modes de réalisation pris à titre d'exemples nullement limitatifs et illustrés sur les dessins annexés, sur lesquels :
la figure 1 est un vue en coupe axiale d'une roue de patin en ligne équipé d'un dispositif de détection selon l'invention ;
la figure 2 est une vue schématique de côté d'un patin ;
la figure 3 est une vue de dessus de l'axe utilisé dans le patin de la figure 2 ;
la figure 4 est une vue similaire à la figure 1 d'un patin selon un autre mode de réalisation de l'invention ;
la figure 5 est une vue similaire à la figure 1 d'un patin selon un autre mode de réalisation de l'invention.
la figure 6 est une vue similaire à la figure 1 d'un patin selon un autre mode de réalisation de l'invention ; et
la figure 7 est une vue développée du codeur de la figure 6.

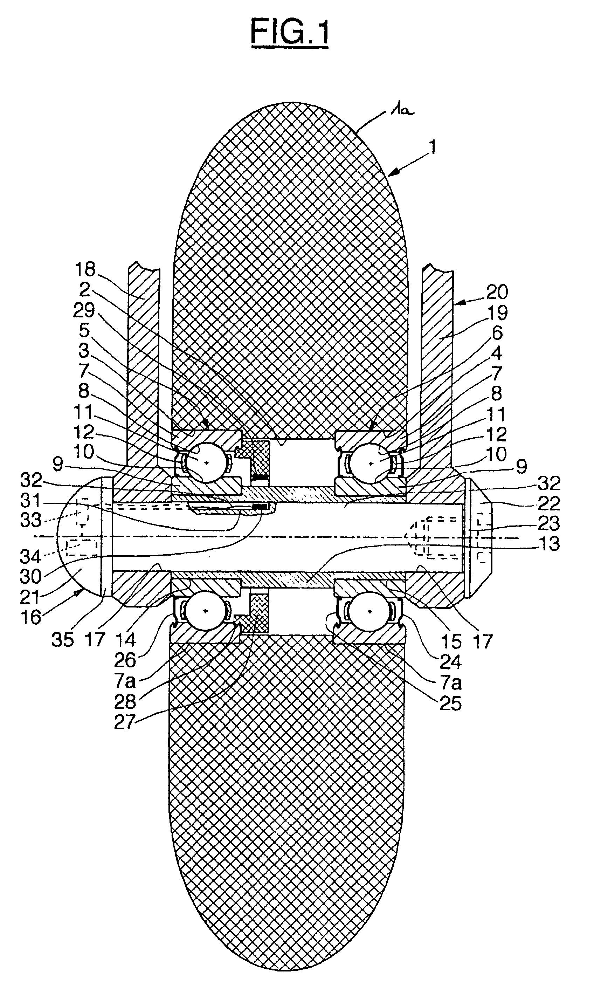

Comme on peut le voir sur la figure 1, la roue 1 d'un patin en ligne est pourvue d'un alésage 2 se prolongeant à chaque extrémité par une portée de montage cylindrique 3 et 4 épaulée pour les paliers à roulement 5 et 6. Les deux portées de montage 3 et 4 sont concentriques à l'axe de rotation de la roue et sont d'un diamètre identique, supérieur à l'alésage de la roue 1. Les paliers à roulement 5 et 6 sont identiques et comprennent une bague extérieure tournante 7 pourvue d'une piste de roulement 8, une bague intérieure non tournante 9 pourvue d'une piste de roulement 10 et une rangée d'éléments roulants 11, par exemple des billes, disposés entre la piste de roulement 8 et la piste de roulement 10 et maintenus espacés dans le sens circonférentiel par une cage 12.

La bague extérieure 7 de chaque palier à roulement est montée par l'intermédiaire de sa surface extérieure cylindrique 7a dans la portée de montage cylindrique correspondante 3 ou 4 de la roue 1. La roue 1 est monobloc, l'alésage 2 et la surface de roulement la faisant partie de la même pièce.

Les bagues intérieures 9 des paliers à roulement 5 et 6 sont supportées par une entretoise 13 en forme de manchon pourvue à chaque extrémité d'une portée cylindrique épaulée 14 et 15 de montage des paliers à roulement 5 et 6. L'entretoise 13 est solidaire d'un axe 16 dépassant des deux côtés de l'entretoise 13 et de la roue 1. Les portions de l'axe qui dépassent de l'entretoise 13 passent dans les alésages 17 prévus dans chaque flanc 18 et 19 d'une platine 20. L'axe 16 est maintenu en place d'un côté par une tête ronde 21 et de l'autre côté par une vis 22 que l'on a vissée en bout de l'axe 16 et qui est pourvue d'une tête large 23 de diamètre supérieur à celui de l'alésage 17 du flanc 19 de la platine 20 et venant porter contre une surface radiale dudit flanc 19 bloquant ainsi l'axe 16.

Le palier à roulement 6 est pourvu de chaque côté de la rangée d'éléments roulants 11 de garnitures d'étanchéité 24 et 25. La garniture d'étanchéité 24 est disposée du côté extérieur tandis que la garniture d'étanchéité 25 est disposée du côté intérieur et fait face au palier à roulement 5.

Le palier à roulement 5 est également pourvu d'une garniture d'étanchéité 26 extérieure mais est dépourvu de garniture d'étanchéité intérieure. En effet, celle-ci est remplacée par un bloc porte codeur 27, réalisé en matériau synthétique solidarisé avec la bague extérieure tournante 7 du palier à roulement 5 de façon identique à la garniture d'étanchéité 26, c'est-à-dire par accrochage dans une rainure 28 de la bague extérieure 7 à proximité de la piste de roulement 8.

Un codeur 29 supporté par le bloc porte codeur 27 est disposé radialement à faible distance de l'entretoise 13. Le codeur 29 se trouve ainsi disposé axialement entre les paliers à roulement 5 et 6, à l'intérieur d'un volume délimité radialement par les surfaces extérieures 7a des bagues extérieures 7 et l'alésage des bagues intérieures 9. Le bloc porte codeur 27 n'est pas en contact avec l'alésage 2 de la roue 1 ce qui facilite la mise en place du palier à roulement 6 muni de son bloc porte codeur 27 dans la roue 1 ou l'opération inverse de démontage.

Un capteur 30 est disposé solidaire d'une partie fixe du patin, en regard du codeur 29 et radialement à l'intérieur de ce dernier. Si le codeur 29 est du type magnétique, on utilise un capteur 30 magnétosensible, par exemple une sonde à effet Hall. Le capteur 30 est disposé dans une rainure 31 formée axialement dans l'axe 16. La rainure 31 est disposée sur la surface extérieure cylindrique de l'axe 16 et s'étend axialement entre la tête 21 de l'axe 16 et sensiblement le niveau du codeur 29 de façon à disposer le capteur 30 dans le même plan radial que le codeur 29.

L'entretoise 13 sera réalisée en un matériau non magnétique pour laisser passer librement les lignes de champ magnétique entre le capteur et le codeur.

Le capteur 30 est relié par un câble de connexion 32 disposé dans la rainure 31 à un émetteur 33 logé dans la tête ronde 21 de l'axe 16 et alimenté par une pile 34 également disposée dans la tête ronde 21. L'émetteur 33 est capable de transmettre le signal émis par le capteur 30 vers un récepteur qui peut être porté par le patineur lui-même par exemple au poignet ou bien situé sur une station fixe au bord d'une piste de patinage. La pile 34 sert à l'alimentation non seulement de l'émetteur 33 mais également du capteur 30 si celui-ci est du type actif. La tête 21 de l'axe 16 peut être réalisée en matériau plastique surmoulé sur un disque 35 formant une tête plate de l'axe 16.

L'équipement d'une roue d'origine avec un dispositif de détection de la vitesse de rotation est très facile. Il suffit de remplacer l'axe et l'un des roulements d'origine par l'axe 16 et le roulement 5 suivant l'invention comportant respectivement le moyen capteur et le moyen codeur. L'entretoise d'origine ne sera changée que dans le cas où elle n'est pas réalisée en matériau magnétique. La roue 1 conserve intégralement sa structure et sa forme d'origine.

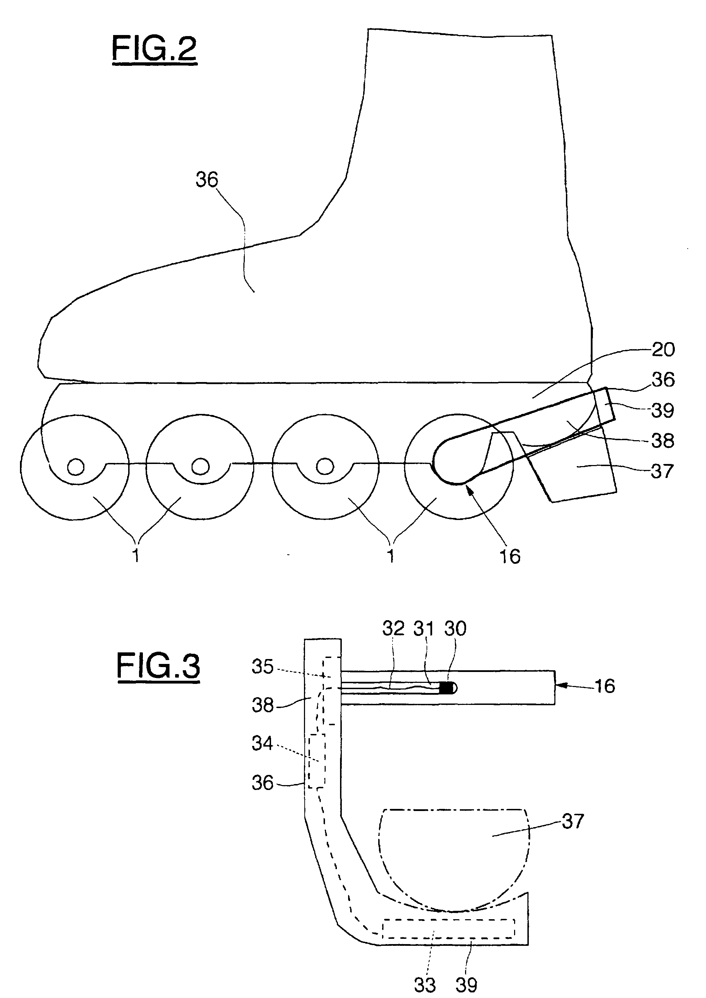

Sur la figure 2, on a représenté de façon schématique un patin en ligne comprenant une chaussure 36 reposant sur une platine 20 équipée de quatre roues 1 d'axes parallèles et alignés, et disposées dans le même plan équatorial. La roue arrière 1 est équipée d'un axe 16 d'un type légèrement différent de celui de la figure 1.

L'axe 16, voir aussi figure 3, se prolonge à partir du disque 35 par un bras réalisé en matière plastique surmoulée sur ledit disque 35. Le bras 36 s'étend vers l'arrière du patin en remontant légèrement et vient en appui sur et derrière un talon frein 37 disposé à l'arrière des roues 1 et permettant au patineur de freiner. Le bras 36 comprend ainsi une première portion 38 s'étendant vers l'arrière et une deuxième portion 39 transversale s'étendant à partir de l'extrémité libre de la première portion 38 et venant en contact ave le talon frein 37. Un tel axe permet de disposer de plus de place pour loger l'émetteur 33 et la pile 34 et est adapté à une transmission de portée plus importante que la transmission obtenue avec la configuration illustrée sur la figure 1.

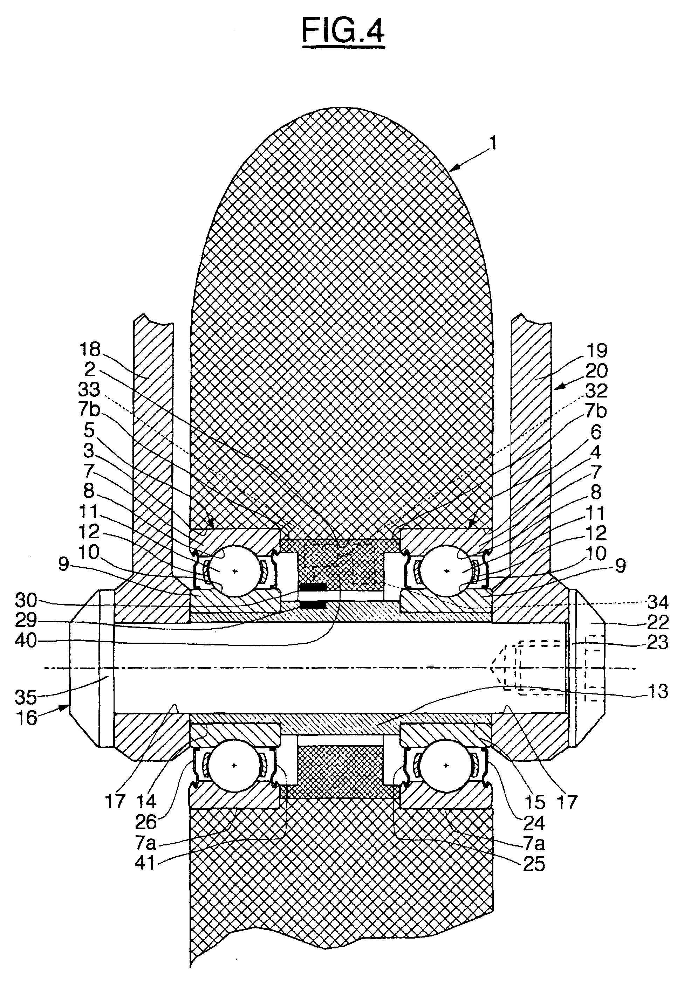

Dans le mode de réalisation illustré sur la figure 4, la roue 1 présente une structure identique à celle de la figure 1 mais le codeur 29 est solidaire de l'entretoise 13 et affleure une surface cylindrique extérieure de l'entretoise 13 entre les deux paliers à roulement 5 et 6. Le capteur 30 est supporté par un bloc porte capteur 40 et est disposé radialement en regard et à une faible distance du codeur 29. Le bloc porte capteur 40 est réalisé radialement en matériau synthétique et est en contact avec l'alésage 2 de la roue 1 et avec les surfaces frontales radiales intérieures 7b des bagues extérieures tournantes 7 des paliers à roulement 5 et 6. L'émetteur 33 et la pile 34 sont intégrés dans le bloc porte capteur 40.

Là encore, l'équipement de l'une des roues 1 avec un dispositif de détection de la vitesse de rotation est extrêmement aisé. Il suffit de démonter les paliers à roulement 5 et 6 d'origine et de les remonter (ou de remonter des roulements neufs) après avoir disposé dans l'alésage 2 de la roue 1 le bloc annulaire 40 comprenant le capteur 30, l'émetteur 33 et la pile 34 et avoir remplacé l'entretoise d'origine par une entretoise 13 comportant un codeur 29 tel qu'un aimant.

La roue 1 ne subit aucune modification et conserve intégralement sa structure et sa forme d'origine. Bien entendu, dans ce mode de réalisation, le palier à roulement 5 est pourvu de deux garnitures d'étanchéité 26 et 41. L'ensemble capteur-codeur est disposé dans un volume de forme cylindrique de dimension radiale inférieure à celui délimité par les surfaces extérieures cylindriques 7a, et centré sur l'axe des paliers à roulement.

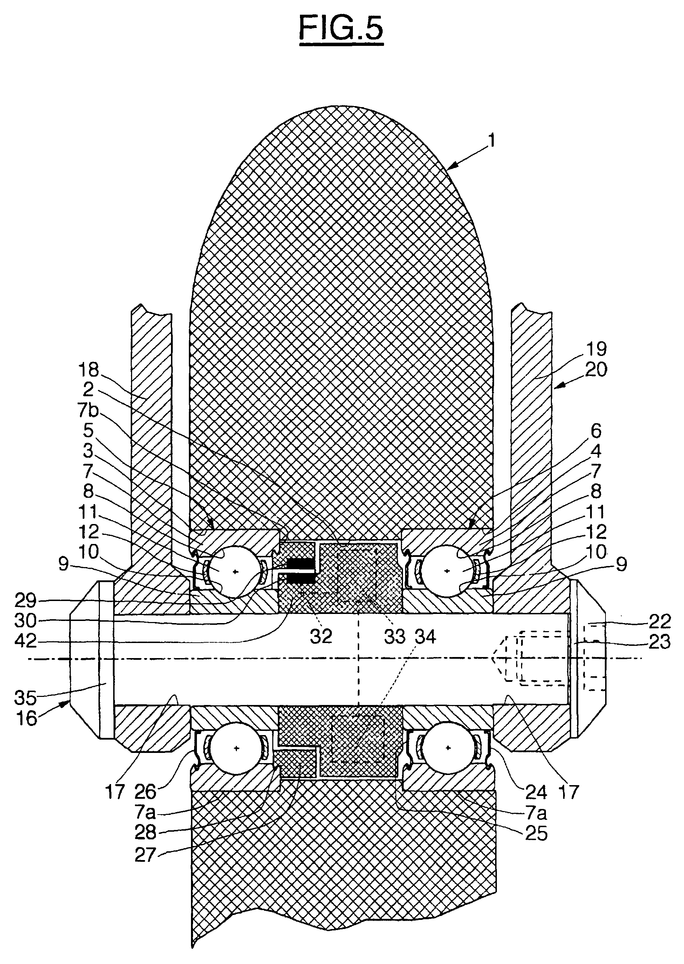

Dans le mode de réalisation illustré sur la figure 5, la roue 1 présente une structure identique à celle de la figure 1. Les paliers à roulement 5 et 6 sont directement montés sur l'axe 16. Le bloc porte codeur 27 est proche de celui de la figure 1, ses dimensions ayant seulement été légèrement réduites. Le bloc porte capteur 42 est monté sur l'axe 16 et est placé axialement en contact avec les bagues intérieures 9 des paliers à roulement 5 et 6 pour lesquels il joue le rôle d'entretoise axiale. Le bloc porte capteur 42 inclut également l'émetteur 33 et la pile 34.

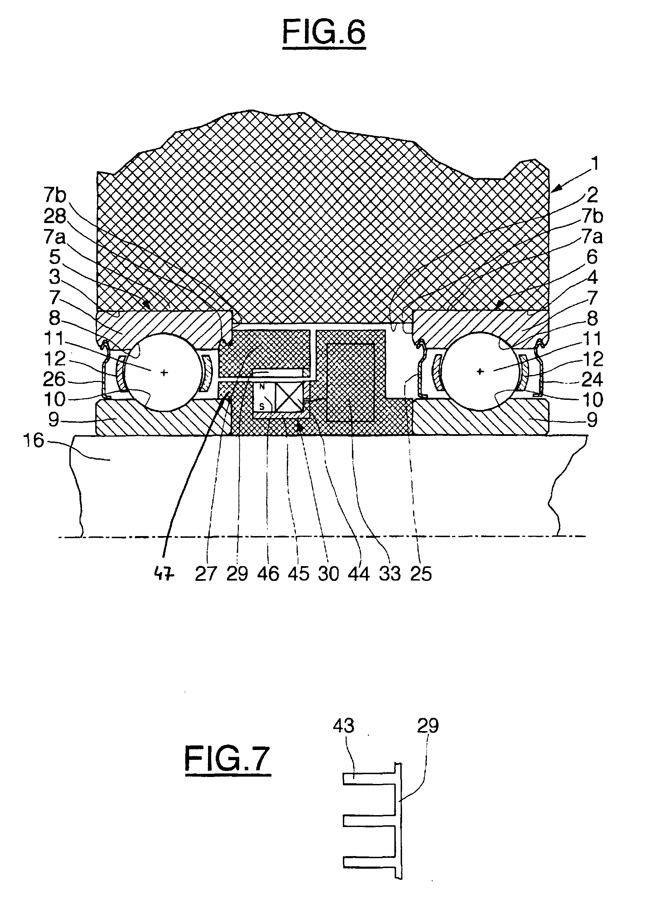

Le mode de réalisation illustré sur les figures 6 et 7 est proche du précédent, à ceci près que le codeur 29 a la forme d'un peigne dont les dents 43 défilent en rotation devant le capteur 30, le codeur 29 étant réalisé en matériau magnétique.

L'ensemble capteur/codeur est du type passif et comprend un capteur fixe comportant un bobinage annulaire 44 enroulé sur la branche axiale d'un concentrateur de flux 45 à section en L réalisé avec un matériau magnétique, ledit bobinage venant en appui axial contre la branche radiale dudit concentrateur, des aimants 46 (ou une bague aimantée multipolaire) étant disposés axialement contre le bobinage 44 et autour de la branche axiale du concentrateur 45.

Les dents 43 défilent en rotation devant les pôles des aimants 46 et autour du bobinage 44 du capteur 30. Lors de la rotation du codeur 29, les pôles des aimants 46 sont soit en face des dents 43 du peigne, soit entre deux dents du peigne. Dans le premier cas les lignes de champ magnétique se referment autour du bobinage 44 en effectuant un circuit fermé entre l'aimant 46, le codeur 29, le concentrateur de flux 45 avec retour à l'aimant 46. Dans le deuxième cas, les lignes de flux ne se referment pas autour du bobinage 44 car elles ne sont pas canalisées par les dents du peigne.

Les variations des champs magnétiques ainsi créées induisent dans la bobine 44 un courant dont la fréquence est proportionnelle à la vitesse de rotation du codeur 29. Le signal sous forme de courant électrique peut alors être utilisé à la fois pour l'information de vitesse et pour la génération d'énergie à destination de l'émetteur 33. Ce mode de réalisation ne nécessite donc pas de pile d'alimentation électrique puisque c'est l'ensemble capteur-codeur qui fonctionne comme une génératrice d'électricité dont le stator est constitué par le capteur et le rotor par le codeur. Le capteur 30 et l'émetteur 33 associé sont logés dans un bloc annulaire 47 solidaire de la bague fixe 9 du roulement 5, l'ensemble codeur étant solidarisé à la bague tournante 7 (une disposition inverse - bloc capteur tournant et ensemble codeur fixe - étant possible).

L'équipement de l'une des roues d'un patin avec un dispositif de détection de la vitesse de rotation peut être effectué par le simple remplacement de l'un des paliers à roulement et de l'entretoise d'origine respectivement par le roulement 5 pourvu du bloc porte codeur 27 et par le bloc porte capteur 42.

Là encore, la roue conserve intégralement sa structure et sa forme d'origine.

Ainsi, grâce à ces différents modes de réalisation de l'invention, on peut équiper facilement n'importe quelle roue du patin avec un dispositif de détection des paramètres de rotation de la roue. Bien entendu, ces modes de réalisation ne sont pas limitatifs. D'autres types de capteurs pourraient être utilisés. Grâce à l'invention, on dispose d'un système de détection de la vitesse de rotation de faible coût et de très grande fiabilité grâce à l'excellente protection du dispositif à l'intérieur d'un espace clos formé par l'alésage de la roue, l'axe et les deux paliers à roulement.

En outre, le montage du dispositif est particulièrement aisé et peut se faire par simple échange ou addition d'éléments ne nécessitant aucune modification de la roue ou des pièces d'origine subsistant dans le montage de roue.

Enfin le dispositif est particulièrement compact.

## Revendications

1. Dispositif de détection de la vitesse de rotation d'une roue (1) d'un patin en ligne, ladite roue étant supportée par des bagues extérieures tournantes (7) de deux paliers à roulement (5, 6) dudit dispositif, des bagues intérieures fixes (9) des deux paliers à roulement étant solidaires d'un axe (16) monté sur une platine (20), **caractérisé par le fait qu'**il comprend un moyen capteur (30) et un moyen codeur (29) disposés dans un volume délimité axialement par les deux paliers à roulement et radialement par une surface cylindrique coaxiale aux paliers à roulement et de diamètre égal aux diamètres extérieurs (7a) des bagues extérieures (7) des paliers à roulement.

2. Dispositif selon la revendication 1, **caractérisé par le fait que** le moyen codeur est monté sur un élément fixe du montage de roue.

3. Dispositif selon la revendication 1, **caractérisé par le fait que** le moyen codeur est monté sur un élément tournant du montage de roue.

4. Dispositif selon l'une quelconque des revendications précédentes, **caractérisé par le fait que** le moyen codeur est monté sur une bague de l'un des paliers à roulement.

5. Dispositif selon la revendication 4, **caractérisé par le fait que** le moyen codeur est monté à la place d'un organe d'étanchéité.

6. Dispositif selon la revendication 3, **caractérisé par le fait que** le moyen codeur est monté en contact avec l'alésage de la roue.

7. Dispositif selon la revendication 2, **caractérisé par le fait que** le moyen codeur est solidaire d'une entretoise (13) en forme de manchon entourant l'axe et supportant les bagues intérieures des paliers à roulement.

8. Dispositif selon l'une quelconque des revendications précédentes, **caractérisé par le fait qu'**il comprend un moyen capteur (30) disposé en regard du moyen codeur et solidaire d'un élément fixe du montage de roue lorsque le moyen codeur est solidaire d'un élément tournant et solidaire d'un élément tournant lorsque le moyen codeur est solidaire d'un élément fixe du montage de roue.

9. Dispositif selon la revendication 8, **caractérisé par le fait que** le moyen capteur est disposé dans un logement (31) aménagé dans l'axe et comprend un émetteur (33) disposé à une extrémité dudit axe.

10. Dispositif selon la revendication 8, **caractérisé par le fait que** le moyen capteur est disposé dans un bloc monté sur une bague du palier à roulement.

11. Dispositif selon la revendication 8, **caractérisé par le fait que** le moyen capteur est disposé dans un bloc monté sur l'axe entre les deux paliers à roulement.

12. Dispositif selon la revendication 8, **caractérisé par le fait que** le moyen capteur est disposé dans un bloc monté dans l'alésage de la roue.

13. Dispositif selon les revendications 10, 11 ou 12, **caractérisé par le fait que** le moyen capteur est en contact avec des surfaces radiales des deux paliers à roulement.

14. Dispositif selon l'une quelconque des revendications 10 à 13, **caractérisé par le fait que** le moyen capteur comprend un émetteur disposé dans le bloc.

15. Dispositif selon la revendication 14, **caractérisé par le fait qu'**il comprend une pile (34) d'alimentation de l'émetteur.

16. Dispositif selon la revendication 14, **caractérisé par le fait qu'**il comprend une génératrice tournante d'alimentation de l'émetteur.

17. Dispositif selon la revendication 16, **caractérisé en ce que** la génératrice est formée par l'ensemble capteur-codeur, l'un de ces deux éléments fonctionnant comme stator tandis que l'autre élément fonctionne comme rotor.

18. Dispositif selon l'une quelconque des revendications précédentes, **caractérisé par le fait que** les moyens capteurs et codeurs sont mis en place en conservant à la roue (1) sa structure et sa forme d'origine.

19. Patin à roues en ligne comprenant un dispositif de détection selon l'une quelconque des revendications précédentes.

## Patentansprüche

1. Vorrichtung zur Erfassung der Rotationsgeschwindigkeit eines Rads (1) eines einspurigen Rollschuhs, wobei das Rad durch umlaufende Außenringe (7) von zwei Wälzlagern (5, 6) der Vorrichtung gelagert ist, wobei stillstehende Innenringe (9) der beiden Wälzlager mit einer an einer Platte (20) montierten Achse (16) fest verbunden sind, **dadurch gekennzeichnet, dass** sie ein Signalaufnehmermittel (30) und ein Signalgebermittel (29) aufweist, die in einem Raum angeordnet sind, der in Axialrichtung durch die beiden Wälzlager und in Radialrichtung durch eine zylindrische Fläche begrenzt ist, die koaxial zu den Wälzlagern verläuft und deren Durchmesser gleich den Außendurchmessern (7a) der Außenringe (7) der Wälzlager ist.

2. Vorrichtung nach Anspruch 1, **dadurch gekennzeichnet, dass** das Signalgebermittel an einem stillstehenden Element der Radbefestigungseinrichtung montiert ist.

3. Vorrichtung nach Anspruch 1, **dadurch gekennzeichnet, dass** das Signalgebermittel an einem umlaufenden Element der Radbefestigungseinrichtung montiert ist.

4. Vorrichtung nach einem der vorhergehenden Ansprüche, **dadurch gekennzeichnet, dass** das Signalgebermittel an einem Ring eines der Wälzlager befestigt ist.

5. Vorrichtung nach Anspruch 4, **dadurch gekennzeichnet, dass** das Signalgebermittel anstelle eines Dichtungsmittels montiert ist.

6. Vorrichtung nach Anspruch 3, **dadurch gekennzeichnet, dass** das Signalgebermittel in Berührung mit der Innenwand der Bohrung des Rads montiert ist.

7. Vorrichtung nach Anspruch 2, **dadurch gekennzeichnet, dass** das Signalgebermittel mit einem in Gestalt einer Hülse ausgebildeten Abstandsstück (13) verbunden ist, das die Achse umgibt und die Innenringe der Wälzlager trägt.

8. Vorrichtung nach einem der vorhergehenden Ansprüche, **dadurch gekennzeichnet, dass** sie ein dem Signalgebermittel gegenüberliegend angeordnetes Signalaufnehmermittel (30) enthält, das an einem ortsfesten Element der Radbefestigungseinrichtung befestigt ist, wenn das Signalgebermittel mit einem umlaufenden Element verbunden ist, und das an einem umlaufenden Element befestigt ist, wenn das Signalgebermittel mit einem stillstehenden Element der Radbefestigungseinrichtung verbunden ist.

9. Vorrichtung nach Anspruch 8, **dadurch gekennzeichnet, dass** das Signalaufnehmermittel in einem in der Achse eingerichteten Sitz (31) aufgenommen ist und einen Sender (33) aufweist, der an einem Ende der Achse angeordnet ist.

10. Vorrichtung nach Anspruch 8, **dadurch gekennzeichnet, dass** das Signalaufnehmermittel in einem Block angeordnet ist, der an einem Ring des Wälzlagers befestigt ist.

11. Vorrichtung nach Anspruch 8, **dadurch gekennzeichnet, dass** das Signalaufnehmermittel in einem Block angeordnet ist, der auf der Achse zwischen den beiden Wälzlagern montiert ist.

12. Vorrichtung nach Anspruch 8, **dadurch gekennzeichnet, dass** das Signalaufnehmermittel in einem Block angeordnet ist, der in der Bohrung des Rades montiert ist.

13. Vorrichtung nach Anspruch 10, 11 oder 12, **dadurch gekennzeichnet, dass** das Signalaufnehmermittel mit Radialflächen der beiden Wälzlager in Berührung steht.

14. Vorrichtung nach einem der Ansprüche 10 bis 13, **dadurch gekennzeichnet, dass** das Signalaufnehmermittel einen Sender enthält, der in dem Block angeordnet ist,.

15. Vorrichtung nach Anspruch 14, **dadurch gekennzeichnet, dass** sie eine Batterie (34) zur Energieversorgung für den Sender enthält.

16. Vorrichtung nach Anspruch 14, **dadurch gekennzeichnet, dass** sie zur Energieversorgung des Senders einen umlaufenden Generator enthält.

17. Vorrichtung nach Anspruch 16, **dadurch gekennzeichnet, dass** der Generator durch die Anordnung aus Signalaufnehmer und Signalgeber gebildet ist, wobei eines der beiden Elemente als Stator dient, während das andere Element als Rotor dient.

18. Vorrichtung nach einem der vorhergehenden Ansprüche, **dadurch gekennzeichnet, dass** das Signalaufnehmer- und Signalgebermittel unter Beibehaltung der ursprünglichen Struktur und der Originalform des Rades (1) eingebaut sind.

19. Rollschuh mit in einer Linie angeordneten Rädern, der eine Erfassungsvorrichtung nach einem beliebigen der vorhergehenden Ansprüche aufweist.

## Claims

1. Device for detecting the rotational speed of a wheel (1) of an in-line skate, the said wheel being supported by rotating outer rings (7) of two rolling bearings (5, 6)of the said device, fixed inner rings (9) of the two rolling bearings being secured to an axle (16) mounted on a plate (20), **characterized in that** it comprises a sensor means (30) and an encoder means (29) which are arranged in a volume bounded axially by the two rolling bearings and radially by a cylindrical surface which is coaxial with the rolling bearings and has a diameter equal to the external diameters (7a) of the outer rings (7) of the rolling bearings.

2. Device according to Claim 1, **characterized in that** the encoder means is mounted on a fixed element of the wheel assembly.

3. Device according to Claim 1, **characterized in that** the encoder means is mounted on a rotating element of the wheel assembly.

4. Device according to any one of the preceding claims, **characterized in that** the encoder means is mounted on a ring of one of the rolling bearings.

5. Device according to Claim 4, **characterized in that** the encoder means is mounted in place of a sealing component.

6. Device according to Claim 3, **characterized in that** the encoder means is mounted in contact with the bore of the wheel.

7. Device according to Claim 2, **characterized in that** the encoder means is secured to a bracing element (13) which is in the form of a sleeve surrounding the axle and supporting the inner rings of the rolling bearings.

8. Device according to any one of the preceding claims, **characterized in that** it comprises a sensor means (30) which is arranged facing the encoder means and is secured to a fixed element of the wheel assembly, when the encoder means is secured to a rotating element, and secured to a rotating element when the encoder means is secured to a fixed element of the wheel assembly.

9. Device according to Claim 8, **characterized in that** the sensor means is arranged in a housing (31) formed in the axle and comprises a transmitter (33) arranged at one end of the said axle.

10. Device according to Claim 8, **characterized in that** the sensor means is arranged in a block mounted on a ring of a rolling bearing.

11. Device according to Claim 8, **characterized in that** the sensor means is arranged in a block mounted on the axle between the two rolling bearings.

12. Device according to Claim 8, **characterized in that** the sensor means is arranged in a block mounted in the bore of the wheel.

13. Device according to Claims 10, 11 or 12, **characterized in that** the sensor means is in contact with radial surfaces of the two rolling bearings.

14. Device according to any one of Claims 10 to 13, **characterized in that** the sensor means comprises a transmitter arranged in the block.

15. Device according to Claim 14, **characterized in that** it comprises a battery (34) for powering the transmitter.

16. Device according to Claim 14, **characterized in that** it comprises a rotating generator for powering the transmitter.

17. Device according to Claim 16, **characterized in that** the generator is formed by the sensor/encoder combination, one of these two elements operating as a stator while the other element operates as a rotor.

18. Device according to any one of the preceding claims, **characterized in that** the sensor and encoder means are fitted while preserving the original structure and shape of the wheel (1).

19. In-line roller skate comprising a detection device according to any one of the preceding claims.
